# FASCICULE DE BREVET EUROPEEN

(11) **EP 1 097 073 B1**
(45) Date de publication et mention de la délivrance du brevet: **01.10.2003**
(21) Numéro de dépôt: 99929477.0
(22) Date de dépôt: 12.07.1999
(51) Int. Cl.: B60T 13/573, B60T 13/565

(54) **MAITRE-CYLINDRE PERFECTIONNE A REACTION HYDRAULIQUE ET AUTO-ASSISTANCE SELECTIVE**
VERBESSERTER HAUPTZYLINDER MIT HYDRAULISCHER REAKTION UND SELEKTIVER SELBSTVERSTÄRKUNG
IMPROVED MASTER CYLINDER WITH HYDRAULIC REACTION AND SELECTIVE SELF-POWERING

(30) Priorité: 16.07.1998 FR 9809084
(43) Date de publication de la demande: 09.05.2001
(73) Titulaire: Bosch Systemes de Freinage, 93700 Drancy (FR)
(72) Inventeur: BENTZ, Jean-Paul, 75011 Paris (FR); LEBOISNE, Cédric, 75011 Paris (FR); BERTHOMIEU, Bruno, Bosch Systèmes de Freinage, 93700 Drancy (FR); SIMON BACARDIT, Juan, Bosch Systèmes de Freinage, 93700 Drancy (FR); SACRISTAN, Fernando, Bosch Systèmes de Freinage, 93700 Drancy (FR)
(74) Mandataire: Hurwic, Aleksander Wiktor
(86) Numéro de dépôt international: FR9901704
(87) Numéro de publication internationale: WO00003903

(56) Documents cités:
- WO-A-98/03385
- FR-A- 2 756 240

## Description

La présente invention concerne un maître-cylindre à réaction hydraulique pour servomoteur pneumatique d'assistance au freinage, comprenant : un corps percé d'un alésage principal; un piston principal cylindrique, percé d'un alésage secondaire, et dont une extrémité externe au corps est susceptible de recevoir une force d'assistance orientée suivant une première direction, ce piston principal étant monté à coulissement étanche dans l'alésage principal pour y délimiter une chambre de travail soumise en fonctionnement à une pression hydraulique; et un piston de réaction dont une première extrémité externe au corps est susceptible de recevoir une force d'actionnement orientée suivant la première direction, et dont une seconde extrémité est montée à coulissement étanche, grâce à un premier joint annulaire, dans l'alésage secondaire pour y délimiter au moins une première chambre de réaction qui communique avec la chambre de travail, le piston de réaction étant susceptible de se déplacer, par rapport au piston principal, sur une course d'amplitude minimale non nulle pour un gradient de la force d'actionnement supérieur à un seuil déterminé.

Un maître-cylindre de ce type est par exemple décrit dans le brevet FR - 2 724 354.

Des dispositifs de ce type ont été développés de façon très récente pour leur aptitude à pallier les défauts dynamiques des servomoteurs pneumatiques d'assistance au freinage.

On sait en effet que les servomoteurs pneumatiques d'assistance au freinage, qui sont utilisés pour fournir une force d'assistance de freinage s'ajoutant à la force d'actionnement exercée par le conducteur sur la pédale de frein et en théorie proportionnelle à cette dernière, présentent le défaut de ne pouvoir développer cette force d'assistance qu'après une certain retard par rapport à la force d'actionnement.

Comme la force d'assistance résulte d'une différence entre les pressions pneumatiques régnant respectivement dans une chambre avant du servomoteur, reliée à une source de dépression, et dans une chambre arrière, reliée à l'atmosphère lors du freinage, et comme le retard de la force d'assistance sur la force d'actionnement est dû à une limitation du débit de l'air atmosphérique admis dans la chambre arrière à travers le clapet d'entrée du servomoteur au moment du freinage, ce retard est d'autant plus important que le freinage est brusque.

Or, les situations dans lesquelles le freinage est rapide sont en général des situations d'urgence, dans lesquelles le conducteur aurait au contraire précisément besoin, le plus tôt possible, de la plus grande force d'assistance possible.

Ces considérations ont conduit, tout récemment, au développement de maîtres-cylindres à réaction hydraulique autorisant d'une part une plus grande amplitude d'ouverture du clapet d'entrée du servomoteur, donc un débit d'air accru, et d'autre part une modulation dynamique de la force de réaction, c'est-à-dire une modulation, en fonction de la vitesse de freinage, de la fraction de la force d'assistance que le maître-cylindre à réaction oppose à la force d'actionnement pour ajuster la force d'assistance en fonction de cette force d'actionnement.

Grâce à des dispositifs décrits dans des documents non pré-publiés, il est ainsi possible de réduire considérablement la force de réaction en cas de freinage d'urgence par rapport à la valeur qu'elle présente en cas de freinage normal, ce qui permet corrélativement d'augmenter la force de freinage disponible dans les situations de freinage d'urgence.

Cependant, un problème encore rencontré dans le développement de ces dispositifs réside dans le fait que la plupart des conducteurs, trompés par la décélération, ont tendance à relâcher leur effort de freinage beaucoup trop tôt en situation de panique, de sorte qu'il est opportun, après l'application d'un coup de frein brutal, de compenser la chute de l'effort de freinage pour réduire ou annuler les effets négatifs de ce réflexe dangereux.

La présente invention a pour but de proposer une solution à ce problème.

A cette fin, le maître-cylindre de l'invention, par ailleurs conforme au préambule ci-dessus, est essentiellement caractérisé en ce qu'il comprend en outre : un premier siège d'obturation formé sur une face frontale de la seconde extrémité du piston de réaction; un second siège d'obturation monté à une première extrémité d'un support de siège disposé dans la première chambre de réaction, à une distance du premier siège d'obturation au plus égale à ladite course d'amplitude minimale; et au moins un premier ressort sollicitant le piston de réaction dans un sens propre à écarter le premier siège d'obturation du second siège d'obturation, en ce que le support de siège présente une seconde extrémité coulissant de façon étanche dans le piston principal grâce à un second joint annulaire, ce support de siège étant, par sa première extrémité, soumis à une pression régnant dans la première chambre de réaction, et, par sa seconde extrémité, soumis à une pression inférieure à la pression régnant dans la première chambre de réaction, et en ce que le piston de réaction et le support de siège constituent, par contact des premier et second sièges, un ensemble étagé présentant, de la première extrémité du piston de réaction vers la seconde extrémité du support de siège, un accroissement de section formant une surface annulaire soumise à la pression de la première chambre de réaction.

Dans un premier mode de réalisation possible de l'invention, la surface annulaire est au moins partiellement constituée par une différence de diamètres de coulissement des premier et second joints annulaires.

Dans un deuxième mode de réalisation possible de l'invention, le piston de réaction délimite dans l'alésage secondaire, entre ses première et seconde extrémités, une seconde chambre de réaction qui communique avec la première chambre de réaction et que le piston de réaction obture de façon étanche grâce à dés troisième et quatrième joints annulaires se succédant dans cet ordre suivant la première direction, ce piston de réaction délimitant aussi dans l'alésage secondaire, entre les quatrième et premier joints annulaires, une chambre vide soumise à une pression inférieure à la pression régnant dans la première chambre de réaction, et la surface annulaire étant au moins partiellement constituée par une différence de diamètres de coulissement des troisième et quatrième joints annulaires.

Dans un troisième mode de réalisation possible de l'invention, la surface annulaire est au moins partiellement constituée par une différence entre le diamètre de coulissement du premier joint annulaire et le diamètre d'obturation entre le piston de réaction et le support de siège.

Les sièges d'obturation peuvent alors être formés sur des épaulements radiaux s'étendant vers l'extérieur respectivement du piston de réaction et du support de siège.

On disposera alors avantageusement un dispositif de compensation de volume dans l'espace délimité entre le piston de réaction et le support de siège, ce dispositif de compensation de volume pouvant être constitué par une membrane en matériau souple délimitant une chambre de compensation étanche et remplie d'un matériau compressible.

Le palpeur, qui sert à transmettre la force d'actionnement au piston de réaction, peut être monté coulissant entre deux butées axiales sur la première extrémité du piston de réaction, un ressort de rappel sollicitant ce palpeur dans la première direction par rapport au piston de réaction.

Il est par ailleurs possible de faire en sorte que la courbe de réponse du servomoteur équipé du maître-cylindre de l'invention présente, comme c'est classiquement le cas, un saut initial, en prévoyant que ce maître-cylindre à réaction hydraulique comprenne un second ressort sollicitant une bague mobile suivant la première direction contre un appui interne de l'alésage secondaire, et que le piston de réaction comporte des moyens pour entraîner la bague mobile lorsqu'il est déplacé, à partir d'une position de repos, suivant une direction inverse de la première direction.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue globale en coupe d'un servomoteur incorporant un maître-cylindre à réaction hydraulique de l'art antérieur;
- la figure 2 est une vue en coupe agrandie d'un maître-cylindre conforme à un premier mode de réalisation de l'invention;
- la figure 3 est une vue en coupe agrandie d'un maître-cylindre conforme à un deuxième mode de réalisation de l'invention, et
- la figure 4 est une vue schématique en coupe d'un maître-cylindre conforme à un troisième mode de réalisation de l'invention.

Comme indiqué précédemment, l'invention concerne un maître-cylindre à réaction hydraulique 1 destiné à équiper un servomoteur pneumatique d'assistance au freinage 2.

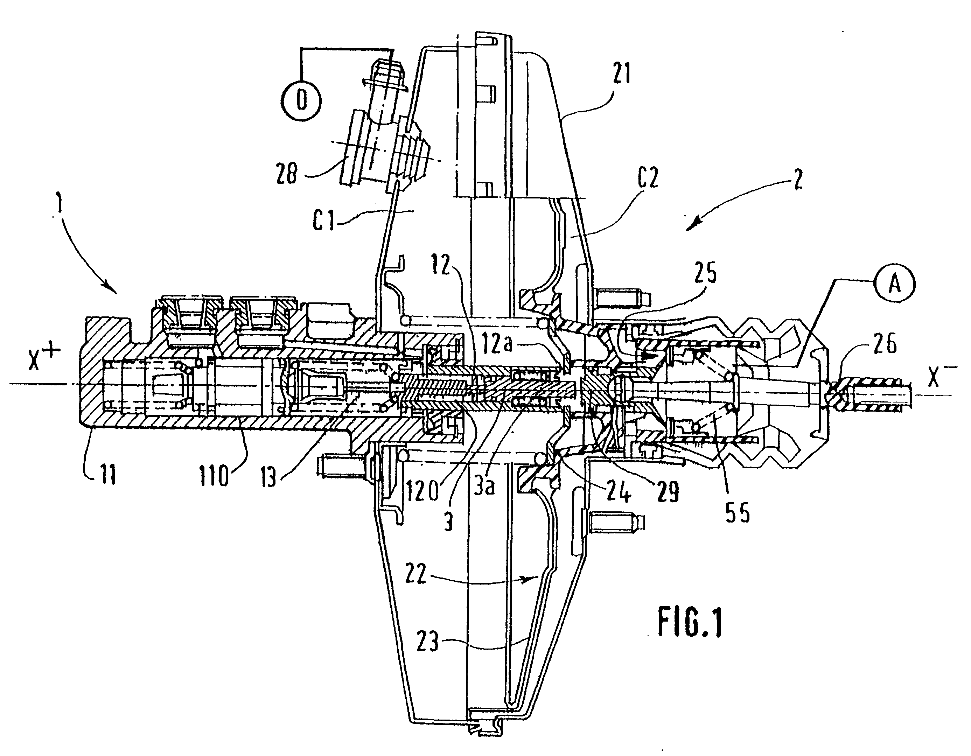

De façon connue en soi, le servomoteur pneumatique d'assistance comprend (figure 1) une enveloppe rigide 21, une cloison mobile 22 comportant une jupe rigide 23, un piston pneumatique 24, un clapet à trois voies 25, et une tige de commande 26 actionnée par une pédale de frein (non représentée).

La cloison mobile 22 sépare de façon étanche le volume intérieur de l'enveloppe rigide 21 en deux chambres pneumatiques C1 et C2, de volumes complémentaires et variables.

La première chambre, ou chambre avant C1, est reliée à une source de basse pression D par l'intermédiaire d'une valve anti-retour 28, et la seconde chambre, ou chambre arrière C2, est susceptible d'être sélectivement reliée, au moyen du clapet à trois voies 25, soit à la source de basse pression D, soit à une source de pression relativement haute A, par exemple l'atmosphère.

Grâce à cet agencement connu en soi, l'actionnement du clapet à trois voies 25, qui permet de relier la chambre arrière C2 à la seconde source A, provoque une différence de pression entre les chambres avant et arrière C1 et C2, la cloison mobile 22 se trouvant ainsi sollicitée par une force qui représente la force d'assistance du servomoteur, et se déplaçant à l'intérieur de l'enveloppe 21.

En pratique, le clapet à trois voies 25 est porté par le piston 24 et son ouverture sur la chambre arrière est commandée par l'application d'une force d'actionnement suivant la direction axiale X+ sur la tige de commande 26, cette tige étant elle-même portée par le piston 24 et se terminant par un palpeur 29.

Le maître-cylindre 1 est disposé dans le prolongement de la tige de commande 26 et comprend essentiellement un corps 11 duquel font saillie un piston principal 12 et un piston de réaction 3, ce piston de réaction faisant partie de moyens de réaction hydraulique qui seront détaillés ultérieurement et qui font plus spécifiquement l'objet de l'invention.

Le corps 11 est percé d'un alésage principal 110, dans lequel le piston principal 12, de forme cylindrique et percé d'un alésage secondaire 120 étagé, est monté coulissant de façon étanche pour y délimiter une chambre de travail 13 soumise en fonctionnement à une pression hydraulique.

L'extrémité 121 du piston principal 12, qui se trouve à l'extérieur du corps 11, offre un appui au piston pneumatique 24, de manière à recevoir la force d'assistance transmise à ce piston pneumatique 24 par la cloison mobile 22 dans son ensemble, et orientée suivant la direction axiale X+.

De façon similaire, une première extrémité 31 du piston de réaction 3, qui se trouve à l'extérieur du corps 11, offre un appui au palpeur 29 pour recevoir la force d'actionnement exercée par le conducteur suivant la direction axiale X+ et transmise par la tige de commande 26.

L'autre extrémité 32 du piston de réaction 3 est montée à coulissement étanche, grâce à un premier joint annulaire 81, dans l'alésage secondaire 120 pour y délimiter une chambre de réaction 4 qui communique avec la chambre de travail 13, par exemple à travers des canaux tels que 124.

Compte tenu du retard avec lequel la force d'assistance se développe par rapport à la force d'actionnement en cas de freinage brusque, le piston de réaction 3 est susceptible de se déplacer, par rapport au piston principal 12, sur une course d'amplitude minimale K lorsque la variation temporelle de la force d'actionnement dépasse un seuil prédéterminé, à partir duquel le freinage peut être considéré comme un freinage d'urgence.

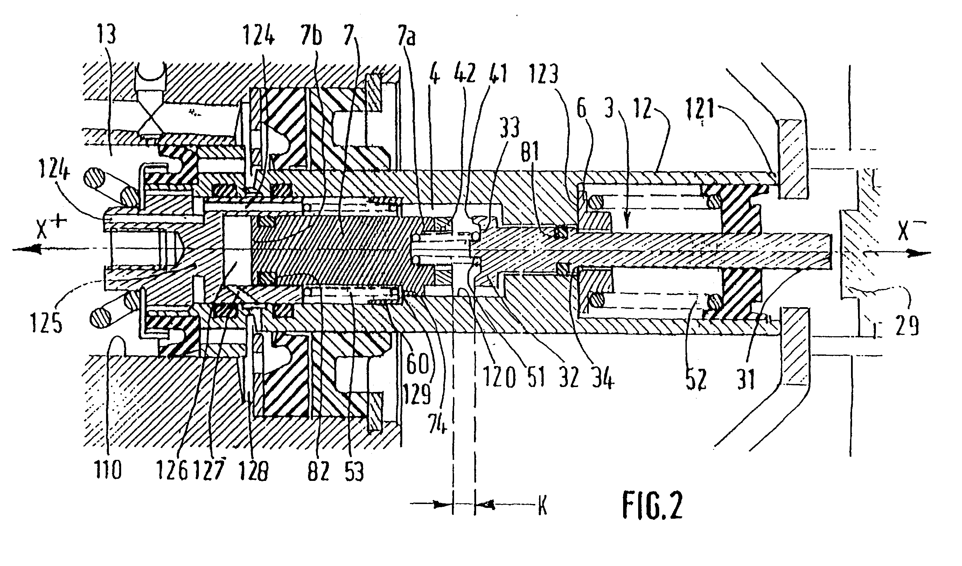

Les moyens de réaction hydraulique qui font plus particulièrement l'objet de l'invention (figures 2, 3 et 4) comprennent notamment, outre le piston de réaction 3, un premier siège d'obturation 41, un second siège d'obturation 42, et au moins un premier ressort 51.

Le premier siège d'obturation 41, qui est formé sur une face frontale 33 de la seconde extrémité 32 du piston de réaction 3, est destiné à venir coopérer avec le second siège d'obturation 42, qui est monté à une première extrémité 7a d'un support de siège 7 disposé dans la chambre de réaction 4.

La distance maximale séparant le premier siège d'obturation 41 du second siège d'obturation 42, c'est-à-dire en pratique la distance qui sépare ces deux sièges dans la position de repos du maître-cylindre, telle que représentée aux figures 2, 3 et 4, est au plus égale à la course K, de manière à permettre au premier siège 41 de venir s'appliquer sur le second siège 42 en cas de freinage d'urgence.

Le premier ressort 51, qui a pour fonction de solliciter le piston de réaction 3 dans un sens propre à écarter le premier siège d'obturation 41 du second siège d'obturation 42, est par exemple un ressort travaillant en compression et installé entre le support de siège 7 et le piston de réaction 3.

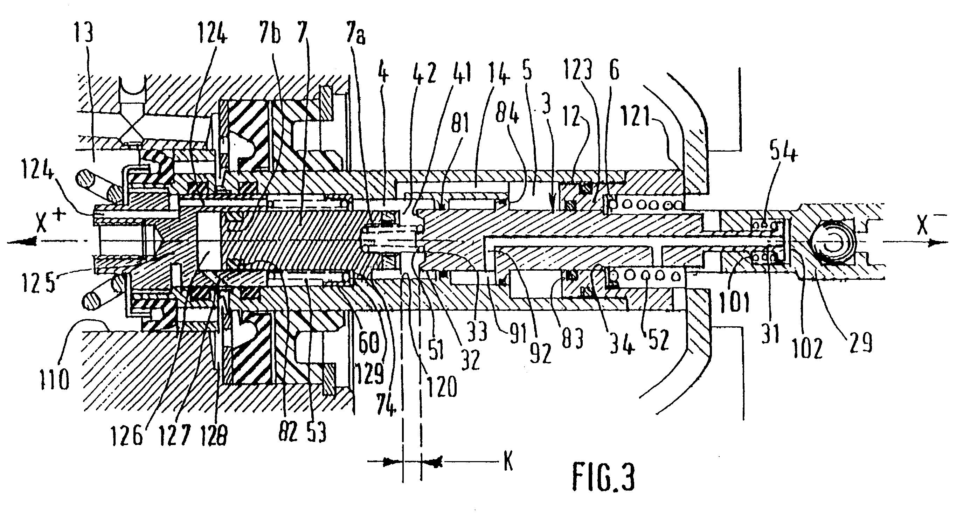

Le support de siège 7, dont la première extrémité 7a porte le second siège d'obturation 42, est, par sa seconde extrémité 7b, monté coulissant, de façon étanche grâce à un second joint annulaire 82, dans le piston principal 12, par exemple dans un embout fixe 125 de ce piston 12, qui est traversé par les canaux 124 (Figures 2 et 3).

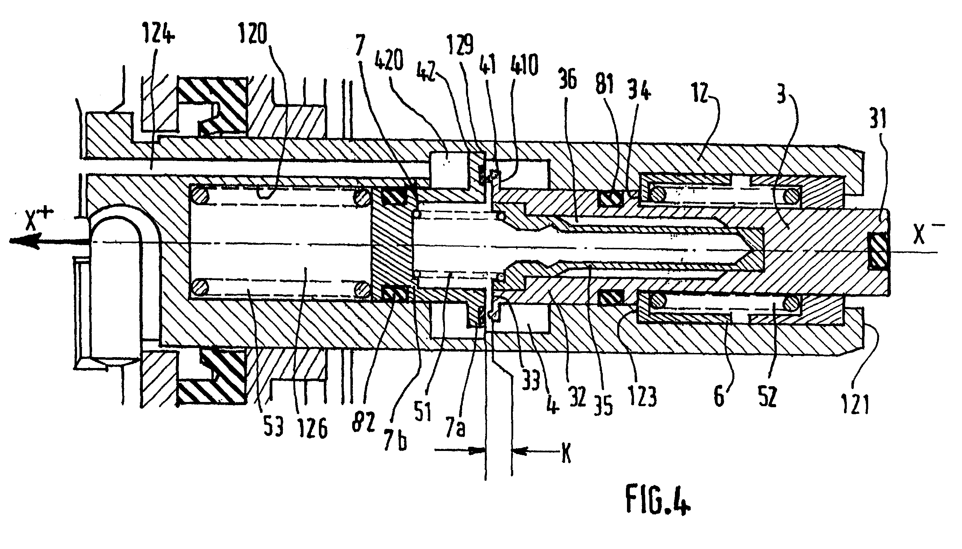

Le support de siège 7 définit ainsi, dans le piston principal 12, une chambre 126 qui est mise en communication, par un conduit 127, avec un espace annulaire 128 soumis à la pression atmosphérique, comme on l'a représenté sur les Figures 2 et 3, ou est elle même remplie d'air à la pression atmosphérique dans la position de repos, comme on l'a représenté sur la Figure 4.

Dans ces conditions, le support de siège 7 est, par sa première extrémité 7a, soumis à la pression qui règne dans la chambre de réaction 4, alors qu'il n'est soumis, par sa seconde extrémité 7b, qu'à la pression atmosphérique, c'est-à-dire à une pression sensiblement constante, inférieure à la pression régnant dans la chambre de réaction 4, et en pratique négligeable par rapport à celle-ci,

Il peut en outre être avantageux, pour reproduire la sensation connue de pédale de frein, de prévoir un second ressort 52 sollicitant une bague mobile 6 suivant la direction X+ contre un appui interne 123 de l'alésage secondaire, le piston de réaction 3 comportant des moyens, tels qu'un épaulement 34, pour entraîner la bague mobile 6 lorsqu'il est déplacé, à partir de sa position de repos représentée aux figures 2, 3 et 4, suivant une direction X- inverse de la direction d'actionnement X+.

Un troisième ressort précontraint 53, qui agit suivant la direction inverse X- sur une bague 60 coopérant avec un épaulement 74 du support de siège 7 et avec une butée 129 du piston principal 12, est de préférence prévu pour placer le second siège d'obturation 42 à la distance K du premier siège d'obturation 41 dans l'état de repos du maître-cylindre, ainsi qu'on l'a représenté sur les Figures 2 et 3. Dans le mode de réalisation de la Figure 4, le troisième ressort 53 sollicite le support de siège 7 directement contre la butée 129 du piston principal 12, la conception particulière de ce mode de réalisation permettant de s'affranchir de la bague 60.

Le fonctionnement du maître-cylindre décrit jusqu'à présent est le suivant.

En cas d'application sur la tige de commande 26 d'une force d'actionnement variant de façon relativement lente, l'enfoncement du palpeur 29 provoque l'ouverture du clapet 25, donc l'admission d'air atmosphérique dans la chambre arrière C2, avant que le piston de réaction 3 ait pu venir appliquer le siège d'obturation 41 sur le second siège 42.

Dans ces conditions, la cloison mobile 22 exerce sur l'extrémité 121 du piston principal 12 une force d'assistance qui déplace le piston principal dans la direction X+ et qui s'oppose à tout mouvement relatif du piston de réaction 3 par rapport au piston principal 12 suivant la direction X+, donc interdit le contact des sièges 41 et 42.

Dans ce mode de fonctionnement, la pression hydraulique qui règne dans la chambre de travail 13 et dans la chambre de réaction 4, et qui s'exerce donc sur toute la section de l'extrémité 32 du piston de réaction 3, finit par repousser le piston de réaction 3 et la bague 6 en comprimant le ressort 52, et fait ainsi apparaître sur le palpeur 29 une force de réaction dont l'intensité est celle des forces de réaction classiquement mises en oeuvre dans les servomoteurs connus.

En cas d'application sur la tige de commande 26 d'une force d'actionnement variant de façon relativement rapide, le piston de réaction 3 permet en revanche au premier siège d'obturation 41 de venir s'appliquer sur le second siège 42 avant que l'air atmosphérique ne puisse être admis dans la chambre arrière C2 en quantité suffisante pour que la cloison mobile 22 exerce sur l'extrémité 121 du piston principal 12 une force d'assistance capable de déplacer le piston principal dans la direction X+ et de rattraper le mouvement du piston de réaction 3.

Or, comme dans ce cas les premier et second sièges 41, 42 sont appliqués l'un sur l'autre, le piston de réaction 3 et le support de siège 7 forment alors un seul et même ensemble.

Selon une caractéristique essentielle de la présente invention, l'ensemble que forment ainsi le piston de réaction 3 et le support de siège 7 par contact des sièges 41 et 42 est étagé et présente, dans la direction d'actionnement X+ entre le piston de réaction 3 et le support de siège 7, un accroissement de section formant une surface annulaire soumise à la pression de la première chambre de réaction 4.

Dans un premier mode de réalisation de l'invention, illustré à la figure 2, la surface annulaire soumise à la pression de la première chambre de réaction 4 est constituée par une différence de diamètres de coulissement des premier et second joints annulaires 81, 82.

Plus précisément, comme les joints annulaires 81 et 82 coulissent tous deux à leur périphérie (figure 2), c'est-à-dire dans la zone définie par leurs diamètres externes respectifs, et comme le second joint 82 a un diamètre externe supérieur au diamètre externe du premier joint 81, la pression hydraulique qui règne dans la chambre de travail 13 et dans la chambre de réaction 4 exerce sur l'ensemble 3, 7 une force orientée suivant la direction X+ et proportionnelle à la différence des surfaces que délimitent les joints 82 et 81, la pression hydraulique dans cette chambre de réaction 4 provoquant en outre, à partir d'une certaine valeur, le collage des premier et second sièges 41 et 42 l'un sur l'autre.

La force ainsi exercée par la pression régnant dans la chambre de réaction 4 s'ajoute à la force d'actionnement exercée par le conducteur, et vient donc compenser toute éventuelle décroissance de cette dernière, au moins aussi longtemps que cette décroissance n'est pas telle qu'elle provoque la fermeture du clapet 25 et le retour du servomoteur en position de repos.

Dans un deuxième mode de réalisation de l'invention, illustré à la figure 3, le piston de réaction 3 délimite dans l'alésage secondaire 120, entre ses première et seconde extrémités 31, 32, une seconde chambre de réaction 5 qui communique avec la première chambre de réaction 4 par exemple par un canal 14, cette seconde chambre de réaction 5 étant obturée de façon étanche par le piston de réaction grâce à des troisième et quatrième joints annulaires 83, 84 se succédant dans cet ordre suivant la première direction X+.

Le piston de réaction 3 délimite également, dans l'alésage secondaire 120 et entre les quatrième et premier joints annulaires 84, 81, une chambre vide 91, la surface annulaire étant alors au moins partiellement constituée par une différence de diamètres de coulissement des troisième et quatrième joints annulaires 83, 84.

La chambre vide 91 peut par exemple contenir de l'air ou être mise en communication, par un orifice 92, avec la chambre avant du servomoteur, l'essentiel étant qu'elle soit soumise à une pression inférieure à la pression régnant dans la première chambre de réaction 4.

Dans ces conditions, il suffit que le troisième joint 83 présente un diamètre interne inférieur au diamètre externe du quatrième joint 84, et/ou que le diamètre interne du premier joint 81 soit inférieur au diamètre externe du deuxième joint 82 pour qu'apparaisse la surface annulaire précédemment définie et pour que l'ensemble 3, 7 reçoive, de la part de la pression régnant dans la chambre de réaction 5, une poussée orientée dans la direction X+, s'ajoutant à la force d'actionnement et propre à en compenser toute éventuelle décroissance.

Dans un troisième mode de réalisation de l'invention, illustré à la figure 4, la surface annulaire soumise à la pression de la première chambre de réaction 4 est constituée par une différence entre le diamètre de coulissement du premier joint annulaire 81 et le diamètre d'obturation entre le piston de réaction 3 et le support de siège 7, et égal au diamètre externe des sièges d'obturation 41 et 42.

On voit sur la Figure 4 que les sièges d'obturation 41 et 42 sont formés respectivement sur des épaulements radiaux 410 et 420 s'étendant vers l'extérieur respectivement du piston de réaction 3 et du support de siège 7, dans la chambre de réaction 4, elle même en partie formée entre deux épaulements de l'alésage étagé 120 du piston principal 12.

De cette manière, comme dans les modes de réalisation précédents, le joint annulaire 81 coulisse par sa périphérie dans une portion de diamètre réduit de l'alésage 120, tandis que les sièges d'obturation 41 et 42 sont au contact l'un de l'autre selon un diamètre supérieur à celui du joint annulaire 81.

La pression hydraulique régnant dans la chambre de travail 13 et dans la chambre de réaction 4 exerce sur l'ensemble 3, 7 une force orientée suivant la direction X+ et proportionnelle à la différence des surfaces que délimitent le joint 81 et les sièges d'obturation 41 et 42, la pression hydraulique dans la chambre de réaction provoquant de plus la confirmation de l'application des sièges 41 et 42 l'un sur l'autre.

De manière à ne pas perturber l'application des sièges 41 et 42 l'un sur l'autre, et à permettre l'étanchéité de ce contact, on pourra avantageusement prévoir un dispositif permettant une compensation de volume dans l'espace délimité par l'ensemble piston de réaction 3 / support de siège 7.

Un tel dispositif de compensation de volume est constitué, dans l'exemple de réalisation de la Figure 4, par une membrane 35 en matériau souple, par exemple un élastomère, de forme générale tubulaire, et fixée par ses deux extrémités au piston de réaction 3, de façon à délimiter une chambre de compensation 36, étanche et remplie d'un matériau compressible tel que de l'air. De la sorte, la variation du volume compris entre le piston de réaction 3 et le support de siège 7, qui intervient entre le moment où les sièges 41 et 42 viennent au contact l'un de l'autre et le moment où la course K a été effectuée, est compensée par la déformation de la membrane 35 et par la compression de la chambre 36.

La pression régnant dans la chambre de réaction 4 engendre ainsi sur l'ensemble piston de réaction 3 / support de siège 7 une force qui s'ajoute à la force d'actionnement exercée par le conducteur, cette force supplémentaire venant ainsi compenser toute décroissance éventuelle de la force d'actionnement, au moins aussi longtemps que cette décroissance n'est pas telle qu'elle provoque la fermeture du clapet 25 et le retour du servomoteur en position de repos.

Comme le montre la figure 3, il peut en outre être avantageux, quelque soit le mode de réalisation choisi, de faire en sorte que le palpeur 29 coulisse entre deux butées axiales 101, 102 sur la première extrémité 31 du piston de réaction, un ressort de rappel 54 étant prévu pour solliciter le palpeur dans la première direction X+ par rapport au piston de réaction.

Grâce à un tel agencement, la force exercée par le ressort 54 (figure 3) lorsque le palpeur 29 tend à retourner dans sa position de repos sous l'effet du ressort de rappel 55 (figure 1) après un coup de frein brutal, vient en déduction de la force de rappel exercée par ce ressort 55 et retarde donc le retour du servomoteur au repos lorsque le conducteur n'a pas manifesté clairement sa volonté de défreiner en relâchant complètement son effort de freinage.

## Revendications

1. Maître-cylindre à réaction hydraulique pour servomoteur pneumatique d'assistance au freinage, comprenant:
un corps (11) percé d'un alésage principal (110);
un piston principal (12) cylindrique, percé d'un alésage secondaire (120), et dont une extrémité (121) externe au corps est susceptible de recevoir une force d'assistance orientée suivant une première direction (X+), ce piston principal étant monté à coulissement étanche dans l'alésage principal pour y délimiter une chambre de travail (13) soumise en fonctionnement à une pression hydraulique; et
un piston de réaction (3) dont une première extrémité (31) externe au corps est susceptible de recevoir une force d'actionnement orientée suivant la première direction (X+), et dont une seconde extrémité (32) est montée à coulissement étanche, grâce à un premier joint annulaire (81), dans l'alésage secondaire (120) pour y délimiter au moins une première chambre de réaction (4) qui communique avec la chambre de travail (13), le piston de réaction (3) étant susceptible de se déplacer, par rapport au piston principal (12), sur une course (K) d'amplitude minimale non nulle pour un gradient de la force d'actionnement supérieur à un seuil déterminé;
un premier siège d'obturation (41) formé sur une face frontale (33) de la seconde extrémité (32) du piston de réaction (3); un second siège d'obturation (42) monté à une première extrémité (7a) d'un support de siège (7) disposé dans la première chambre de réaction (4), à une distance du premier siège d'obturation (41) au plus égale à ladite course d'amplitude minimale; et au moins un premier ressort (51) sollicitant le piston de réaction (3) dans un sens propre à écarter le premier siège d'obturation (41) du second siège d'obturation (42), ledit support de siège (7) présentant une seconde extrémité (7b) coulissant de façon étanche dans le piston principal (12) grâce à un second joint annulaire (82), **caractérisé en ce que** ledit support de siège est, par sa première extrémité (7a), soumis à une pression régnant dans la première chambre de réaction (4), et, par sa seconde extrémité (7b), soumis à une pression inférieure à la pression régnant dans la première chambre de réaction (4), et **en ce que** le piston de réaction (3) et le support de siège (7) constituent, par contact des premier et second sièges d'obturation (41, 42), un ensemble étagé présentant, de la première extrémité (31) du piston de réaction vers la seconde extrémité (7b) du support de siège (7), un accroissement de section formant une surface annulaire soumise à la pression de la première chambre de réaction (4).

2. Maître-cylindre à réaction hydraulique suivant la revendication 1, **caractérisé en ce que** la surface annulaire est au moins partiellement constituée par une différence de diamètres de coulissement des premier et second joints annulaires (81, 82).

3. Maître-cylindre à réaction hydraulique suivant la revendication 1 ou 2, **caractérisé en ce que** le piston de réaction (3) délimite dans l'alésage secondaire (120), entre ses première et seconde extrémités (31, 32), une seconde chambre de réaction (5) qui communique avec la première chambre de réaction (4) et que le piston de réaction obture de façon étanche grâce à des troisième et quatrième joints annulaires (83, 84) se succédant dans cet ordre suivant la première direction (X+), **en ce que** le piston de réaction (3) délimite dans l'alésage secondaire (120), entre les quatrième et premier joints annulaires (84, 81), une chambre vide (91) soumise à une pression inférieure à la pression régnant dans la première chambre de réaction (4), et **en ce que** la surface annulaire est au moins partiellement constituée par une différence de diamètres de coulissement des troisième et quatrième joints annulaires (83, 84).

4. Maître-cylindre à réaction hydraulique suivant l'une quelconque des revendications précédentes, **caractérisé en ce que** la force d'actionnement est transmise au piston de réaction (3) par un palpeur (29), **en ce que** le palpeur est monté coulissant entre deux butées axiales (101, 102) sur la première extrémité (31) du piston de réaction, et **en ce qu'**un ressort de rappel (54) sollicite le palpeur dans la première direction (X+) par rapport au piston de réaction.

5. Maître-cylindre à réaction hydraulique suivant l'une quelconque des revendications précédentes, **caractérisé en ce qu'**il comprend un second ressort (52) sollicitant une bague mobile (6) suivant la première direction (X+) contre un appui interne (123) de l'alésage secondaire, et **en ce que** le piston de réaction (3) comporte des moyens (34) pour entraîner la bague mobile (6) lorsqu'il est déplacé, à partir d'une position de repos, suivant une seconde direction (X-) inverse de la première direction (X+).

## Patentansprüche

1. Hauptzylinder mit hydraulischer Reaktion für pneumatische Bremskraftverstärker, mit:
einem Körper (11), der von einer Hauptbohrung (110) durchsetzt ist;
einem zylindrischen Hauptkolben (12), der von einer Sekundärbohrung (120) durchsetzt ist und von dem ein außerhalb des Körpers liegendes Ende (121) eine Hilfskraft aufnehmen kann, die entlang einer ersten Richtung (X+) gerichtet ist, wobei dieser Hauptkolben dicht gleitend in der Hauptbohrung angebracht ist, um dort eine Arbeitskammer (12) zu begrenzen, die im Betrieb einem hydraulischen Druck unterworfen ist;
und einem Reaktionskolben (3), von dem ein erstes, außerhalb des Körpers liegendes Ende (31) eine Betätigungskraft aufnehmen kann, die entlang der ersten Richtung (X+) gerichtet ist, und von dem ein zweites Ende (32) dank einer ersten ringförmigen Dichtung (81) dicht gleitend in der Sekundärbohrung (120) angebracht ist, um dort wenigstens eine erste Reaktionskammer (4) zu begrenzen, die mit der Arbeitskammer (13) in Verbindung steht, wobei sich der Reaktionskolben (3) bezüglich des Hauptkolbens (12) über einen Hub (K) mit einer minimalen Amplitude nicht null für einen Gradienten der Betätigungskraft verschieben kann, der über einem bestimmten Schwellenwert liegt;
einem an einer Vorderseite (33) des zweiten Endes (32) des Reaktionskolbens (3) gebildeten ersten Verschlußsitz (41); einem zweiten Verschlußsitz (42), der an einem ersten Ende (7a) eines Sitzträgers (7) angebracht ist, der in der ersten Reaktionskammer (4) in einem Abstand von dem ersten Verschlußsitz (41) angeordnet ist, der höchstens gleich dem Hub mit minimaler Amplitude ist; und wenigstens einer Feder (51), die den Reaktionskolben (3) in einer geeigneten Richtung beaufschlagt, um den ersten Verschlußsitz (41) von dem zweiten Verschlußsitz (42) zu entfernen, wobei der Sitzträger (7) ein zweites Ende (7b) aufweist, das dank einer ringförmigen Dichtung (82) auf dichte Weise in dem Hauptkolben (12) gleitet, **dadurch gekennzeichnet, daß** der Sitzträger mit seinem ersten Ende (4) einem Druck unterworfen ist, der in der ersten Reaktionskammer (4) herrscht, und mit seinem zweiten Ende (7b) einem Druck unterworfen ist, der niedriger als der Druck ist, der in der ersten Reaktionskammer (4) herrscht, und daß der Reaktionskolben (3) und der Sitzträger (7) durch den Kontakt des ersten und des zweiten Verschlußsitzes (41, 42) eine abgestufte Einheit bildet, die von dem ersten Ende (31) des Reaktionskolbens zu dem zweiten Ende (7b) des Sitzträgers (7) einen anwachsenden Querschnitt bildet, der eine ringförmige Fläche bildet, die dem Druck der ersten Reaktionskammer (4) unterworfen ist.

2. Hauptzylinder mit hydraulischer Reaktion nach Anspruch 1, **dadurch gekennzeichnet, daß** die ringförmige Fläche wenigstens teilweise durch eine Differenz von Gleitdurchmessern der ersten und der zweiten ringförmigen Dichtung (81, 82) gebildet ist.

3. Hauptzylinder mit hydraulischer Reaktion nach Anspruch 1 oder 2, **dadurch gekennzeichnet, daß** der Reaktionskolben (3) in der Sekundärbohrung (120) zwischen seinem ersten und seinem zweiten Ende (31, 32) eine zweite Reaktionskammer (5) bildet, die mit der ersten Reaktionskammer (4) in Verbindung steht, und daß der Reaktionskolben dank der dritten und der vierten ringförmigen Dichtung (83, 84), die in dieser Reihenfolge aufeinanderfolgen, entlang der ersten Richtung (X+) auf dichte Weise verschließt, und daß der Reaktionskolben (3) in der Sekundärbohrung (120) zwischen der vierten und der ersten ringförmigen Dichtung (84, 81) eine leere Kammer (91) begrenzt, die einem Druck unterworfen ist, der niedriger als der Druck ist, der in der ersten Reaktionskammer (4) herrscht, und daß die ringförmige Dichtung wenigstens teilweise durch eine Differenz von Gleitdurchmessern der dritten und der vierten ringförmigen Dichtung (83, 84) gebildet ist.

4. Hauptzylinder mit hydraulischer Reaktion nach einem der vorhergehenden Ansprüche, **dadurch gekennzeichnet, daß** die Betätigungskraft zu dem Reaktionskolben (3) von einem Fühler (29) übertragen wird, und daß der Fühler gleitend zwischen zwei axialen Anschlägen (101, 102) an dem ersten Ende (31) des Reaktionskolbens angebracht ist, und daß eine Rückstellfeder (54) den Fühler in der ersten Richtung (X+) bezüglich des Reaktionskolbens beaufschlagt.

5. Hauptzylinder mit hydraulischer Reaktion nach einem der vorhergehenden Ansprüche, **dadurch gekennzeichnet, daß** er eine zweite Feder (52) aufweist, die einen beweglichen Ring (6) entlang der ersten Richtung (X+) gegen ein inneres Lager (123) der Sekundärbohrung beaufschlagt, und daß der Reaktionskolben (3) Mittel (34) aufweist, um den beweglichen Ring (6), wenn er verschoben wird, aus einer Ruhestellung entlang einer zweiten Richtung (X-) mitzunehmen, die umgekehrt zu der ersten Richtung (X+) ist.

## Claims

1. Master cylinder with hydraulic reaction for a pneumatic brake booster, comprising:
a body (11) pierced with a main bore (110);
a cylindrical main piston (12) pierced with a secondary bore (120), and of which one end (121), outside the body, can receive a boost force directed in a first direction (X+), this main piston being mounted so that it can slide, without leaking, in the main bore in order therein to delimit a working chamber (13) which during operation is subjected to a hydraulic pressure; and
a reaction piston (3) of which a first end (31), outside the body, is capable of receiving an actuating force directed in the first direction (X+), and of which a second end (32) is mounted so that it can slide, without leaking, by virtue of a first annular seal (81), in the secondary bore (120) in order therein to delimit at least a first reaction chamber (4) that communicates with the working chamber (13), the reaction piston (3) being capable of moving, with respect to the main piston (12), through a travel (K) of non-zero minimum amplitude for an actuation force gradient that exceeds a given threshold;
a first shut-off seat (41) formed on a front face (33) of the second end (32) of the reaction piston (3); a second shut-off seat (42) mounted at a first end (7a) of a seat support (7) placed in the first reaction chamber (4), at a distance from the first shut-off seat (41) that is at most equal to the said minimum-amplitude travel; and at least a first spring (51) urging the reaction piston (3) in a direction likely to move the first shut-off seat (41) away from the second shut-off seat (42), the said seat support (7) having a second end (7b) sliding, without leaking, in the main piston (12) by virtue of a second annular seal (82),
**characterized in that** the said seat support is, via its first end (7a), subjected to a pressure prevailing in the first reaction chamber (4) and, via its second end (7b), subjected to a pressure lower than the pressure prevailing in the first reaction chamber (4), and **in that** the reaction piston (3) and the seat support (7) constitute, by contact between the first and second shut-off seats (41, 42), a stepped assembly which, from the first end (31) of the reaction piston towards the second end (7b) of the seat support (7), has an increase in section forming an annular surface subjected to the pressure of the first reaction chamber (4).

2. Master cylinder with hydraulic reaction according to Claim 1, **characterized in that** the annular surface at least partially consists of a difference in diameters of sliding of the first and second annular seals (81, 82).

3. Master cylinder with hydraulic reaction according to Claim 1 or 2, **characterized in that** the reaction piston (3) delimits in the secondary bore (120), between its first and second ends (31, 32), a second reaction chamber (5) which communicates with the first reaction chamber (4) and that the reaction piston shuts off in a sealed manner by virtue of third and fourth annular seals (83, 84) which follow one another in this order in the first direction (X+), **in that** the reaction piston (3) delimits in the secondary bore (120), between the fourth and first annular seals (84, 81), an empty chamber (91) subjected to a pressure lower than the pressure prevailing in the first reaction chamber (4), and **in that** the annular surface at least partially consists of a difference in diameters of sliding of the third and fourth annular seals (83, 84).

4. Master cylinder with hydraulic reaction according to any one of the preceding claims, **characterized in that** the actuating force is transmitted to the reaction piston (3) by a feeler (29), **in that** the feeler is mounted so that it can slide between two axial stops (101, 102) on the first end (31) of the reaction piston, and **in that** a return spring (54) urges the feeler in the first direction (X+) with respect to the reaction piston.

5. Master cylinder with hydraulic reaction according to any one of the preceding claims, **characterized in that** it comprises a second spring (52) urging a moving ring (6) in the first direction (X+) against an internal rest (123) in the secondary bore, and **in that** the reaction piston (3) comprises means (34) for carrying along the moving ring (6), when this piston is moved, from a position of rest, in a second direction (X-) which is the opposite direction to the first direction (X+) .
